(19) Europäisches Patentamt
European Patent Office
Office européen des brevets

(11) EP 2 081 044 A2

(12) **EUROPEAN PATENT APPLICATION**

(43) Date of publication:
**22.07.2009 Bulletin 2009/30**

(51) Int Cl.:
***G01S 1/00*** *(2006.01)*

(21) Application number: **09150452.2**

(22) Date of filing: **13.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **15.01.2008 US 14604**

(71) Applicant: **Honeywell International Inc.**
**Morristown, NJ 07962 (US)**

(72) Inventors:
- **McDonald, James A.**
**Honeywell International Inc.**
**Morristown, NJ 07962-2245 (US)**
- **Vanderwerf, Kevin D.**
**Honeywell International Inc.**
**Morristown, NJ 07962 (US)**

(74) Representative: **Buckley, Guy Julian**
**Patent Outsourcing Limited**
**1 King Street**
**Bakewell**
**Derbyshire DE45 1DZ (GB)**

(54) **Navigation system with apparatus for detecting accuracy failures**

(57) A navigation system (12) for a vehicle having a receiver (14) operable to receive a plurality of signals from a plurality of transmitters includes a processor (16) and a memory device (18). The memory device (18) has stored thereon machine-readable instructions that, when executed by the processor (16), enable the processor (16) to determine a set of error estimates corresponding to delta pseudo-range measurements derived from the plurality of signals, determine an error covariance matrix for a main navigation solution, and, using a solution separation technique, determine at least one protection level value based on the error covariance matrix.

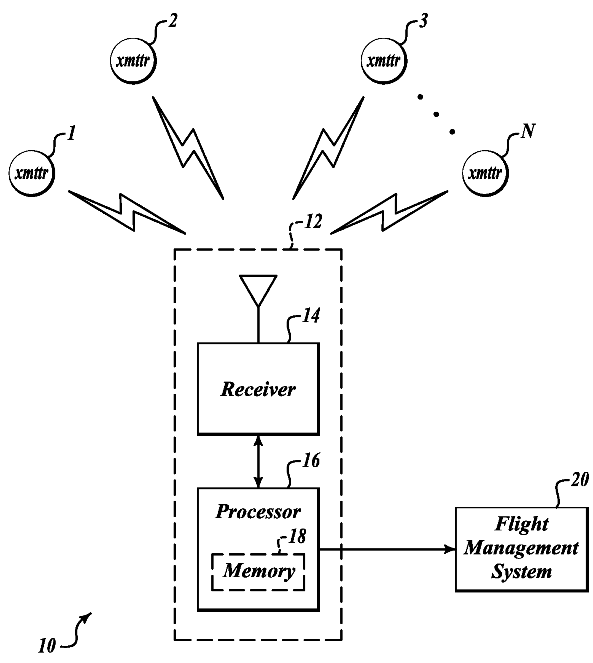


*FIG.1*

EP 2 081 044 A2

## Description

## BACKGROUND OF THE INVENTION

In addition to providing a navigation solution, navigation systems should also be able to provide users with timely warnings indicating when it is not safe/acceptable to use the navigation solution. A navigation system with this capability is, by definition, a navigation system with integrity.

With GPS for example, satellite failures can occur which result in unpredictable deterministic range errors on the failing satellite. Satellite failures are rare *(i.e.*, on the order of 1 every year), but safety-critical navigation systems must account for these errors. Typically, navigation systems (*e.g.*, GPS Receivers) provide integrity on their position solution (*i.e.*, horizontal position and altitude), but do not provide integrity on other navigation parameters, such as ground speed and vertical velocity.

## SUMMARY OF THE INVENTION

In an embodiment of the invention, a navigation system for a vehicle having a receiver operable to receive a plurality of signals from a plurality of transmitters includes a processor and a memory device. The memory device has stored thereon machine-readable instructions that, when executed by the processor, enable the processor to determine a set of error estimates corresponding to delta pseudo-range measurements derived from the plurality of signals, determine an error covariance matrix for a main navigation solution, and, using a solution separation technique, determine at least one protection level value based on the error covariance matrix.

## BRIEF DESCRIPTION OF THE DRAWINGS

Preferred and alternative embodiments of the present invention are described in detail below with reference to the following drawings.

FIG. 1 shows a first navigation system incorporating embodiments of the present invention; and

FIG. 2 shows a second navigation system incorporating embodiments of the present invention; and

FIG. 3 shows a process according to an embodiment of the invention.

## DETAILED DESCRIPTION OF THE PREFERRED EMBODIMENT

An embodiment builds on many of the concepts applied to position integrity in order to provide integrity on the following navigation states: North Velocity, East Velocity, Ground Speed, Vertical Speed, Flight Path Angle, and Track Angle.

One or more embodiments may include a bank of filters/solutions (whether Kalman Filter or Least Squares) that may be composed of a main solution that processes all satellite measurements along with a set of sub-solutions; where each sub-solution processes one satellite fewer than the main solution

Navigation systems primarily employ one of the following implementations in order to calculate a navigation solution: a Kalman Filter or a Least Squares Solution. In general, GPS receivers which have GPS satellite measurements (and possibly altitude aiding) use a Least Squares solution while Hybrid Inertial/GPS systems use a Kalman Filter. Both methods use a recursive algorithm which provides a solution via a weighted combination of predictions and measurements. However, a Least Squares Solution possesses minimal prediction capability and is therefore heavily influenced by measurements (in fact the weighting factor on predictions in a Least Squares Solution approaches zero with each iteration). A Kalman Filter on the other hand is able to take advantage of additional information about the problem; such as additional measurement data (e.g., inertial data) or additional information about system noise and/or measurement noise. This allows the Kalman Filter to continuously vary its weighting on its own predictions versus measurement inputs (this may be done via the Kalman Gain). A Kalman Filter with very low confidence in its own predictions (i.e., a very large Kalman Gain) will behave much like a Least Squares Solution.

The Error Covariance Matrix, often denoted by the symbol "P," within a navigation system represents the standard deviation of the error state estimates within a navigation solution. For example, given a 3x3 matrix representing the error covariance for the x, y, and z velocity states within a Kalman filter:

$$P=\begin{bmatrix}\sigma_x^2 & E[\sigma_x\sigma_y] & E[\sigma_x\sigma_z]\\ E[\sigma_y\sigma_x] & \sigma_y^2 & E[\sigma_y\sigma_z]\\ E[\sigma_z\sigma_x] & E[\sigma_z\sigma_y] & \sigma_z^2\end{bmatrix}$$

We would expect (with a properly modeled Kalman Filter) that, under the condition that a satellite fault is not a factor, the absolute value of the difference between the true ground speed and the Kalman Filter's ground speed would exceed $2\sqrt{(\sigma_x^2+\sigma_y^2)}$ ~5%, or less, of the time. The same would be true for vertical velocity using $2\sqrt{\sigma_z^2}$ instead. Note the off diagonal terms here represent cross-correlation between the velocities (how a change in x-velocity impacts a change in y-velocity or z-velocity for example).

The Error Covariance Matrix may be a critical component of any fault detection and integrity limit algorithm. For a Kalman Filter, P may be a fundamental part of the recursive Kalman Filter process. A Kalman Filter navigation solution may not be produced without the P matrix. With a Least-Squares solution, calculation of the actual navigation solution may not require use of an error covariance matrix. Therefore, a Least Squares Solution may only produce a P matrix if it is desired to provide integrity with the navigation solution. Calculation of a P matrix for a Least Squares solution is based on the satellite geometry (line of sight from user to all satellites in view) and an estimate of the errors on the satellite measurements.

Once a navigation system has an error covariance matrix along with its actual navigation solution, fault detection and calculation of integrity can be performed via Solution Separation or Parity Space Based techniques.

FIG. 1 shows a radio navigation system 10 incorporating features of an embodiment of the present invention. The system includes several transmitters 1-N and user set 12. Transmitters 1-N may be a subset of the NAVSTAR GPS constellation of satellite transmitters, with each transmitter visible from the antenna of user set 12. Transmitters 1-N broadcast N respective signals indicating respective transmitter positions and signal transmission times to user set 12.

User set 12, mounted to an aircraft (not shown), includes receiver 14, processor 16, and processor memory 18. Receiver 14, preferably NAVSTAR GPS compatible, receives the signals, extracts the position and time data, and provides pseudorange measurements to processor 16. From the pseudorange measurements, processor 16 can derive a position solution for the user set. Although the satellites can transmit their positions in World Geodetic System of 1984 (WGS-84) coordinates, a Cartesian earth-centered earth-fixed system, an embodiment determines the position solution in a local reference frame L, which is level with the north-east coordinate plane and tangential to the Earth. This frame choice, however, is not critical, since it is well-understood how to transform coordinates from one frame to another.

Processor 16 can also use the pseudorange measurements to detect satellite transmitter failures and to determine a worst-case error, or protection limit, both of which it outputs with the position solution to flight management system 20. Flight management system 20 compares the protection limit to an alarm limit corresponding to a particular aircraft flight phase. For example, during a pre-landing flight phase, such as nonprecision approach, the alarm limit (or allowable radial error) may be 0.3 nautical miles, but during a less-demanding oceanic flight phase, the alarm limit may be 2-10 nautical miles. (For more details on these limits, see RTCA publication DO-208, which is incorporated herein by reference.) If the protection limit exceeds the alarm limit, the flight management system, or its equivalent, announces or signals an integrity failure to a navigational display (not shown) in the cockpit of the aircraft. The processor also signals whether it has detected any satellite transmitter failures.

As shown in FIG. 2, a second embodiment extends the radio navigation system 10 of FIG. 1 with the addition of inertial reference unit 22 for providing inertial data to processor 16 and pressure altitude sensor 27 for providing altitude data to processor 16. The resulting combination constitutes a hybrid navigation system 30. (Altitude sensor 27 can also provide data to stabilize inertial reference unit, as known in the art, but for clarity the connection is not shown here.)

Inertial reference unit 22, mounted to the aircraft (not shown), preferably includes three accelerometers 24a-24c for measuring acceleration in three dimensions and three gyroscopes 26a-26c for measuring angular orientation, or attitude, relative a reference plane. Inertial reference unit 22 also includes inertial processor 25 which determines an inertial position solution $r_i$, preferably a three-element vector in an earth-fixed reference frame. Inertial processor 26 also preferably converts the acceleration data into raw acceleration vector $a_{raw}$ and attitude data into raw angular velocity vector $\omega raw$. The preferred angular velocity vector defines the rotation of the body frame (fixed to the aircraft) in three dimensions, and the preferred inertial acceleration defines the three components of acceleration in body frame coordinates. Inertial processor 26 also determines a transformation matrix C for transforming body frame coordinates to local vertical frame L, a three-element rotation vector $\omega_{IE}$ which describes rotation of the earth-based frame E versus inertial frame I transformed to L frame, and rotation vector $\omega_{EL}$ which describes rotation of the L frame versus the earth-fixed

frame E transformed to L frame. The details of this inertial processing are well known in the art.

An embodiment of the invention involves the processor 16 receiving pseudo-range and delta pseudo-range measurements from the receiver 14. The delta pseudo-range measurement from a GPS satellite represents the change in carrier phase over a specific time interval. The delta pseudo-range corresponds to the change (over that time interval) in user-satellite range plus receiver clock bias and can be used to determine the velocity of a user (along with the clock frequency of the user's clock). An embodiment of the invention determines the integrity values on horizontal and vertical velocities calculated from a least-squares solution and then applies those integrity values in order to obtain integrity for: North Velocity, East Velocity, Groundspeed, Vertical Velocity, track angle, and flight path angle for a hybrid navigation solution.

FIG. 3 illustrates a process 300, according to an embodiment of the invention, that can be implemented in one or both of systems 10 and 30. The process 300 is illustrated as a set of operations or steps shown as discrete blocks. The process 300 may be implemented in any suitable hardware, software, firmware, or combination thereof. As such the process 300 may be implemented in computer-executable instructions that can be transferred from one electronic device to a second electronic device via a communications medium. The order in which the operations are described is not to be necessarily construed as a limitation.

Referring to FIG. 3, at steps 310 and 320, respectively, the processor 16 computes the sigma (error) values on pseudo-range and delta pseudo-range measurements.

At a step 330, the processor 16 determines the measurement matrix. The true vector of delta pseudo-range residuals $\dot{\rho}$ is related to the incremental velocity and clock frequency bias solution vector **y** (distance from the velocity linearization point) as follows:

$$\dot{\boldsymbol{\rho}} = \mathbf{H}\mathbf{y} \qquad (1)$$

where

$$\mathbf{H} = \begin{bmatrix} LOS_{1x} & LOS_{1y} & LOS_{1z} & 1 \\ LOS_{2x} & LOS_{2y} & LOS_{2z} & 1 \\ \vdots & \vdots & \vdots & \vdots \\ LOS_{Nx} & LOS_{Ny} & LOS_{Nz} & 1 \end{bmatrix}, \quad \mathbf{y} = \begin{bmatrix} v_x \\ v_y \\ v_z \\ v_{fc} \end{bmatrix} \qquad (2)$$

where

$v_x$, $v_y$, $v_z$ = x, y, and z user velocity components

$v_{fc}$ = clock frequency bias

H represents the measurement matrix and can be thought of as the mechanism for relating errors in the satellite delta pseudo-ranges into the solution vector. At a step 340, the processor 16 computes the Error Covariance Matrix.

The vector of measured delta pseudo-range residuals $\tilde{\dot{\boldsymbol{\rho}}}$ is the true delta pseudo-range residual vector $\dot{\rho}$ (described above) plus the vector of residual errors $\delta\dot{\rho}$ and is thus

$$\tilde{\dot{\boldsymbol{\rho}}} = \mathbf{H}\mathbf{y} + \delta\dot{\boldsymbol{\rho}} \qquad (3)$$

The processor 16 designates the least-squares post-update estimate of **y** as $\hat{\mathbf{y}}$. Then, the processor 16 can define the vector of post-update measurement residuals as

$$\xi = \tilde{\dot{\boldsymbol{\rho}}} - \mathbf{H}\hat{\mathbf{y}} \qquad (4)$$

Each post-update measurement residual is the difference between the measured delta pseudo-range residual and the predicted delta pseudo-range residual based on the post-update estimate $\hat{\mathbf{y}}$. The processor 16 can compute a vector of normalized post-update measurement residuals by dividing each residual $\xi_i$ by the expected one-standard deviation value of the corresponding delta pseudo-range error $\sigma_{dr}(i)$. In vector form, this would be

$$\bar{\boldsymbol{\xi}} = \begin{bmatrix} 1/\sigma_{dr}(1) & 0 & \cdots & 0 \\ 0 & 1/\sigma_{dr}(2) & \cdots & 0 \\ \vdots & \vdots & \ddots & \vdots \\ 0 & 0 & \cdots & 1/\sigma_{dr}(N) \end{bmatrix} \begin{bmatrix} \xi_1 \\ \xi_2 \\ \vdots \\ \xi_N \end{bmatrix} = \sqrt{\mathbf{W}}\boldsymbol{\xi} \quad (5)$$

where the processor 16 has defined

$$\mathbf{W} = \begin{bmatrix} 1/\sigma_{dr}^2(1) & 0 & \cdots & 0 \\ 0 & 1/\sigma_{dr}^2(2) & \cdots & 0 \\ \vdots & \vdots & \ddots & \vdots \\ 0 & 0 & \cdots & 1/\sigma_{dr}^2(N) \end{bmatrix} \quad (6)$$

If we assume that errors in each delta pseudo-range measurement are uncorrelated with the errors in the others, then **W** represents the inverse of the delta pseudo-range error covariance matrix.

At a step 350, the processor 16 computes a weighted least-squares solution. A "weighted least-squares solution" can be determined by finding the value of $\hat{\mathbf{y}}$ which minimizes the sum of squared normalized residuals. Thus we wish to minimize

$$\bar{\boldsymbol{\xi}}^T\bar{\boldsymbol{\xi}} = \boldsymbol{\xi}^T\mathbf{W}\boldsymbol{\xi} = \left(\tilde{\dot{\boldsymbol{\rho}}} - \mathbf{H}\hat{\mathbf{y}}\right)^T \mathbf{W}\left(\tilde{\dot{\boldsymbol{\rho}}} - \mathbf{H}\hat{\mathbf{y}}\right) \quad (7)$$

This minimizing value is determined by taking the derivative of (7), setting it equal to zero, and solving for $\hat{\mathbf{y}}$. Doing this, the processor 16 obtains

$$\begin{aligned} \hat{\mathbf{y}} &= \left(\mathbf{H}^T\mathbf{W}\mathbf{H}\right)^{-1}\mathbf{H}^T\mathbf{W}\tilde{\dot{\boldsymbol{\rho}}} \\ &= \mathbf{S}\tilde{\dot{\boldsymbol{\rho}}} \end{aligned} \quad (8)$$

where we have defined the weighted least-squares solution matrix S as

$$\mathbf{S} = \left(\mathbf{H}^T\mathbf{W}\mathbf{H}\right)^{-1}\mathbf{H}^T\mathbf{W} \quad (9)$$

The error in the post-updated solution is

$$
\begin{aligned}
\delta\mathbf{y} &= \hat{\mathbf{y}} - \mathbf{y} \\
&= \left(\mathbf{H}^T\mathbf{W}\mathbf{H}\right)^{-1}\mathbf{H}^T\mathbf{W}\Delta\tilde{\boldsymbol{\rho}} - \mathbf{y}
\end{aligned}
\qquad (10)
$$

Substituting (3) into (10), the processor 16 gets

$$
\begin{aligned}
\delta\mathbf{y} &= \left(\mathbf{H}^T\mathbf{W}\mathbf{H}\right)^{-1}\mathbf{H}^T\mathbf{W}\left(\mathbf{H}\mathbf{y} + \delta\dot{\boldsymbol{\rho}}\right) - \mathbf{y} \\
&= \mathbf{y} - \left(\mathbf{H}^T\mathbf{W}\mathbf{H}\right)^{-1}\mathbf{H}^T\mathbf{W}\delta\dot{\boldsymbol{\rho}} - \mathbf{y} \\
&= \left(\mathbf{H}^T\mathbf{W}\mathbf{H}\right)^{-1}\mathbf{H}^T\mathbf{W}\delta\dot{\boldsymbol{\rho}} \\
&= \mathbf{S}\delta\dot{\boldsymbol{\rho}}
\end{aligned}
\qquad (11)
$$

Thus, the solution matrix **S** maps the delta pseudo-range errors into the post-updated solution error vector. The solution error covariance matrix **P** is defined as

$$
\begin{aligned}
\mathbf{P} &= E\left[\delta\mathbf{y}\delta\mathbf{y}^T\right] = \mathbf{S}E\left[\delta\dot{\boldsymbol{\rho}}\delta\dot{\boldsymbol{\rho}}^T\right]\mathbf{S}^T \\
&= \mathbf{S}\mathbf{W}^{-1}\mathbf{S}^T \\
&= \left(\mathbf{H}^T\mathbf{W}\mathbf{H}\right)^{-1}\mathbf{H}^T\mathbf{W}\mathbf{W}^{-1}\mathbf{W}\mathbf{H}\left(\mathbf{H}^T\mathbf{W}\mathbf{H}\right)^{-1} \\
&= \left(\mathbf{H}^T\mathbf{W}\mathbf{H}\right)^{-1}
\end{aligned}
\qquad (12)
$$

Instead of utilizing the matrix **W** explicitly, the processor 16 could incorporate the weightings into the measurement matrix and the residual vector directly by making the following substitutions

$$\overline{\mathbf{H}} = \sqrt{\mathbf{W}}\mathbf{H} \qquad (13)$$

$$\overline{\dot{\boldsymbol{\rho}}} = \sqrt{\mathbf{W}}\tilde{\dot{\boldsymbol{\rho}}} \qquad (14)$$

$$\delta\overline{\dot{\boldsymbol{\rho}}} = \sqrt{\mathbf{W}}\delta\dot{\boldsymbol{\rho}} \qquad (15)$$

Equations (8), (9), (11), and (12) then become

$$
\begin{aligned}
\hat{\mathbf{y}} &= \left(\overline{\mathbf{H}}^T\overline{\mathbf{H}}\right)^{-1}\overline{\mathbf{H}}^T\overline{\dot{\boldsymbol{\rho}}} \\
&= \overline{\mathbf{S}\dot{\boldsymbol{\rho}}}
\end{aligned}
\qquad (16)
$$

$$\overline{\mathbf{S}} = \left(\overline{\mathbf{H}}^T\overline{\mathbf{H}}\right)^{-1}\overline{\mathbf{H}}^T \qquad (17)$$

$$\delta \mathbf{y} = \overline{\mathbf{S}} \delta \overline{\dot{\boldsymbol{\rho}}} \quad (18)$$

$$\mathbf{P} = \left( \overline{\mathbf{H}}^T \overline{\mathbf{H}} \right)^{-1} \quad (19)$$

At a step 360, the processor 16 computes weighted least-squares velocity integrity values. The processor 16 can employ a snapshot solution separation algorithm that utilizes equations 16-19 which incorporate **W.**

In snapshot solution separation, one is interested in the separation between the main solution and sub-solution (one which excludes a satellite from its solution). The $j^{th}$ sub-solution can be computed by zeroing out the $j^{th}$ row of the measurement matrix H. If the processor 16 designates the measurement matrix of the sub-solution as $H_j$, then the resulting least-squares sub-solution is:

$$\begin{aligned} \hat{\mathbf{y}}_j &= \left( \overline{\mathbf{H}}_j^T \overline{\mathbf{H}}_j \right)^{-1} \overline{\mathbf{H}}_j^T \overline{\dot{\boldsymbol{\rho}}} \\ &= \overline{\mathbf{S}}_j \overline{\dot{\boldsymbol{\rho}}} \end{aligned} \quad (20)$$

where the least-squares sub-solution matrix is defined as:

$$\overline{\mathbf{S}}_j = \left( \overline{\mathbf{H}}_j^T \overline{\mathbf{H}}_j \right)^{-1} \overline{\mathbf{H}}_j^T \quad (21)$$

and similarly the covariance matrix $P_j$ is defined as:

$$\mathbf{P}_j = \left( \overline{\mathbf{H}}_j^T \overline{\mathbf{H}}_j \right)^{-1} \quad (22)$$

The error covariance matrix **P** represents the uncertainty in horizontal and vertical velocity error estimates. Element (3,3) of this matrix represents the uncertainty of the vertical velocity error while the upper **2x2** portion of **P** describes the uncertainty for the x and y horizontal velocity errors. A 2x2 matrix is required for x and y velocity in order to account for cross-correlation between x and y.

Note that the $j^{th}$ column of $\overline{\mathbf{S}}_j$ will contain all zeros. If the processor 16 designates the main solution with the subscript zero, then the $j^{th}$ solution separation will be

$$\begin{aligned} d\hat{\mathbf{y}}_j &= \hat{\mathbf{y}}_0 - \hat{\mathbf{y}}_j \\ &= \left( \mathbf{y} + \delta \hat{\mathbf{y}}_0 \right) - \left( \mathbf{y} + \delta \hat{\mathbf{y}}_j \right) \\ &= \delta \hat{\mathbf{y}}_0 - \delta \hat{\mathbf{y}}_j \\ &= \overline{\mathbf{S}}_0 \delta \dot{\boldsymbol{\rho}} - \overline{\mathbf{S}}_j \delta \dot{\boldsymbol{\rho}} \\ &= \left( \overline{\mathbf{S}}_0 - \overline{\mathbf{S}}_j \right) \delta \dot{\boldsymbol{\rho}} \\ &= \Delta \overline{\mathbf{S}}_j \tilde{\dot{\boldsymbol{\rho}}} \end{aligned} \quad (23)$$

where $\Delta\overline{\mathbf{S}}_j$ is referred to as the $j^{th}$ separation solution matrix. The covariance of the $j^{th}$ separation solution is

$$d\mathbf{P}_j = E\left[d\hat{\mathbf{y}}_j \cdot d\hat{\mathbf{y}}_j^T\right] = \Delta\bar{\mathbf{S}}_j\Delta\bar{\mathbf{S}}_j^T$$
$$or$$
$$d\mathbf{P}_j = E\left[d\hat{\mathbf{y}}_j \cdot d\hat{\mathbf{y}}_j^T\right] = P_0 - P_j \quad \mathbf{(24)}$$

The horizontal velocity separation is an elliptical distribution in the x-y plane. Since the separation is caused by the sub-least-squares solution processing one less satellite than the main solution, it is predominantly along one direction (the semi-major axis of the ellipse). Thus, the processor 16 assumes that the error is entirely along the semi-major axis of this ellipse. The separation along any one axis is normally distributed. The variance in this worst case direction is given by the maximum eigenvalue $\lambda^{dP_j(1:2,1:2)}$ of the 2x2 matrix formed from the horizontal velocity elements of the separation covariance. Thus, the horizontal velocity separation uncertainty in the worst case direction for each sub-solution is computed as follows

$$\sigma_{d_j^{horz}} = \sqrt{\lambda^{\mathbf{dP}_j(1:2,1:2)}} = \sqrt{\frac{dP_j(1,1)+dP_j(2,2)}{2} + \sqrt{\left(\frac{dP_j(1,1)-dP_j(2,2)}{2}\right)^2 + \left(dP_j(1,2)\right)^2}} \quad \mathbf{(25)}$$

The detection threshold is computed using the allowed false alarm probability and a Normal distribution assumption as follows

$$D_j^{horz} = \sigma_{d_j^{horz}} Q^{-1}\left(\frac{p_{fa}}{2N_{sol}}\right) = \sigma_{d_j^{horz}} \cdot K_{fa}\left(N_{sol}\right) \quad \mathbf{(26)}$$

where
$p_{fa}$ = probability of false alert per independent sample
$N_{sol}$ = Number of sub-least-squares solutions
$K_{fa}$ = False alarm sigma multiplier
and $Q^{-1}$ is the inverse of

$$Q(z) = \frac{1}{\sqrt{2\pi}}\int_z^\infty e^{-u^2/2}du = 1 - \frac{1}{\sqrt{2\pi}}\int_{-\infty}^z e^{-u^2/2}du = 1 - F(z) \quad \mathbf{(27)}$$

The function $F(z)$ is the well known standard normal distribution function.
Note that the allowed probability must be divided by 2, since the distribution is 2-sided, and divided by $N_{sol}$, since each active sub-filter has a chance for a false alert.

Based on (23) above the horizontal velocity discriminator (the horizontal velocity difference between the main solution and a sub-solution) can be calculated as follows:

$$d_j^{horz} = \sqrt{\left[dy_j(1)\right]^2 + \left[dy_j(2)\right]^2} \quad \mathbf{(28)}$$

where 1 and 2 indicate the x and y components of the velocity states.

A fault (or failure) is detected/declared anytime the discriminator exceeds the detection threshold for any main solution/sub-solution combination.

By definition, the horizontal velocity protection level (HVPL) is the error bound which contains the horizontal

velocity error for the main least-squares solution to a probability of 1-$p_{md}$ (where $p_{md}$ is the allowable probability of missed detection of a GPS satellite failure) when the discriminator is at the threshold (i.e., when the largest undetectable error is present).

At the time an error is detected, the main least-squares horizontal velocity solution is separated from the sub-least-squares horizontal velocity solution by $D_{0n}^{horz}$ (defined in (26) above). The main least-squares velocity with respect to the true velocity is thus $D_j^{horz}$ plus the sub-least-squares velocity error (assuming, in the worst case, that the sub-solution velocity error is in the opposite direction as its difference from the main solution). The sub-solution velocity error bound $a_j^{horz}$, can be determined from the 2x2 matrix formed from the horizontal velocity error elements of the sub-solution "Fault Detection" error covariance, $\mathbf{P_j}$. As a worst case, the processor 16 assumes that this direction coincides with the worst-case direction (semi-major axis) of the error ellipse. Thus, the variance is given by the maximum eigenvalue of the 2x2 matrix formed from the horizontal position error elements of the sub-filter "Fault Detection" error covariance matrix as shown below:

$$\sigma_{horz_max} = \sqrt{\lambda_{max}^{P(1:2,1:2)}} = \sqrt{\frac{P(1,1)+P(2,2)}{2} + \sqrt{\left(\frac{P(1,1)-P(2,2)}{2}\right)^2 + \left(P(1,2)\right)^2}} \qquad (29)$$

And the sub-solution velocity error bound can be defined as:

$$a_{0n}^{horz} = \sigma_{horz_max} Q^{-1}\left(p_{md}\right) = \sigma_{horz_max} K_{md} \qquad (30)$$

where $Q^{-1}$ is as defined in (27)

Note that the processor 16 only considers one side of the distribution, since the failure biases the distribution to one side. The allowed probability of missed detection is 1.0e-3/hr. When combined with the satellite failure probability of 1.0e-4/hr, an integrity failure rate of 1.0e-7/hr is achieved. Evaluating the Kmd, the processor 16 gets

$$K_{md} = 3.1 \qquad (31)$$

The HVPL for each active sub-solution j, is then computed as

$$\mathrm{HVPL_j} = D_j^{horz} + a_j^{horz} \qquad (32)$$

The final horizontal velocity protection level selected for the main least-squares solution is the maximum HVPL value from all main/sub-solution combinations.

Calculation of the Vertical Velocity Protection Level is done in the same manner as the horizontal method described above with one difference: Since the error distribution is only along one axis:

Equation (25) becomes:

$$\sigma_{d_j^{vert}} = \sqrt{dP(3,3)} \qquad (33)$$

Equation (26) becomes:

$$D_j^{vert} = \sigma_{d_j^{vert}} Q^{-1}\left(\frac{p_{fa}}{2N_{sol}}\right) = \sigma_{d_j^{vert}} \cdot K_{fa}\left(N_{sol}\right) \qquad (34)$$

Equation (28) becomes:

$$d_j^{vert} = \sqrt{\left[dy_j\left(3\right)\right]^2} \qquad (35)$$

where 3 indicates the z-component of the velocity state.

Equation (29) becomes:

$$\sigma_{vert_max} = \sqrt{P(3,3)} \qquad (36)$$

Equation (30) becomes:

$$a_{0n}^{vert} = \sigma_{vert_max} Q^{-1}\left(p_{md}\right) = \sigma_{vert_max} K_{md} \qquad (37)$$

At a step 370, the processor 16 computes Hybrid Integrity Values. Once the HVPL and VVPL values are known for the main least-squares solution they can be applied to the hybrid solution via the following equations:

North Velocity:

$$HVPL_{Hybrid}^{North} = HVPL_{Least-Sqares} + \left|V_{Hybrid}^{North} - V_{Least-Square}^{North}\right| \qquad (38)$$

where:

$HVPL_{Hybrid}^{North}$ = Horizontal Velocity Protection Level on Hybrid North Velocity

$HVPL_{Least-Sqares}$ = Horizontal Velocity Protection Level from Solution Separation

$V_{Hybrid}^{North}$ = Hybrid North Velocity

$V_{Least-Square}^{North}$ = Least-Squares North Velocity

Similarly for East Velocity, Ground Speed, and vertical velocity:

$$HVPL_{Hybrid}^{East} = HVPL_{Least-Sqares} + \left|V_{Hybrid}^{East} - V_{Least-Square}^{East}\right| \qquad (39)$$

$$HVPL_{Hybrid}^{GroundSpeed} = HVPL_{Least-Sqares} + \left|V_{Hybrid}^{GroundSpeed} - V_{Least-Square}^{GroundSpeed}\right| \qquad (40)$$

$$VVPL_{Hybrid} = VVPL_{Least-Sqares} + \left| V_{Hybrid}^{Vertical} - V_{Least-Square}^{Vertical} \right| \quad (41)$$

Note that the conservative assumption may be made here by the processor 16 that all least-squares horizontal protection levels are the same for north velocity, east velocity, and ground speed.

The track angle is defined as follows:

$$\psi_t = \tan^{-1}\left(\frac{v_e}{v_n}\right) \quad (42)$$

Taking the partial differentials, we find the error in the track angle

$$\begin{aligned} \delta\psi_t &\cong \frac{1}{1+\left(\frac{v_e}{v_n}\right)^2}\left(\frac{v_n\delta v_e - v_e\delta v_n}{v_n^2}\right) \\ &= \left(\frac{v_n\delta v_e - v_e\delta v_n}{v_g^2}\right) \end{aligned} \quad (43)$$

where $v_g$ is ground speed. The mean square value is

$$\sigma_{\psi_t}^2 = E\left[\delta\psi_t^2\right] = \left(\frac{v_n\sigma_{v_e}^2 - v_e\sigma_{v_n}^2 - 2v_n v_e E\left[\delta v_n \delta v_e\right]}{v_g^4}\right) \quad (44)$$

If we assume that the north and east errors have equal standard deviations and are uncorrelated, then for a large ground speed the ground speed error standard deviation may be the same as the north and east standard deviations. Thus,

$$\begin{aligned} \sigma_{\psi_t}^2 &= E\left[\delta\psi_t^2\right] = \left(\frac{v_n^2\sigma_{v_g}^2 + v_e^2\sigma_{v_g}^2}{v_g^4}\right) = \frac{v_g^2\sigma_{v_g}^2}{v_g^4} \\ &= \frac{\sigma_{v_g}^2}{v_g^2} \end{aligned} \quad (45)$$

Therefore, the standard deviation of the track angle error is

$$\sigma_{\psi_t} = \frac{\sigma_{v_g}}{v_g} \quad (46)$$

Based on this standard deviation track angle error, computation of hybrid track angle protection level $TAPL_{hybrid}$ (in degrees) may be defmed as:

$$TAPL_{Hybrid} = \left(\frac{180}{\pi}\right)\frac{HVPL_{Least-Sqares}}{V_{Hybrid}^{GroundSpeed}} + \left|\psi_{Hybrid} - \psi_{Least-Squares}\right| \quad (47)$$

where

$\psi_{Hybrid}$ = Hybrid Track Angle

$\psi_{Least-Squares}$ = Least-Squares Track Angle

In a similar manner it can be shown that, if the vertical velocity is zero, then the standard deviation of the flight path angle error is

$$\sigma_\gamma = \frac{\sigma_{v_z}}{v_g} \quad (48)$$

Therefore, computation of hybrid flight path angle protection level $FPAPL_{hybrid}$ (in degrees) is defined as:

$$FPAPL_{Hybrid} = \left(\frac{180}{\pi}\right)\frac{VVPL_{Least-Sqares}}{V_{Hybrid}^{GroundSpeed}} + \left|\gamma_{Hybrid} - \gamma_{Least-Squares}\right| \quad (49)$$

where

$\gamma_{Hybrid}$ = Hybrid Flight Path Angle

$\gamma_{Least-Squares}$ = Least-Squares Flight Path Angle

Note that these approximations for track angle and flight path angle may not be valid for very slow ground speeds below 120 knots.

Satellite pseudo-range errors are composed of the following components:

Receiver Noise and Multipath Errors
Clock and Ephemeris Errors
Tropospheric and Ionospheric Errors

Note that the ionosphere is the dominating error impacting GPS accuracy.

Receiver noise and multipath along with clock and ephemeris standard deviations can all be treated as constants.

Calculation of a tropospheric standard deviation may be based on a standard model which accounts for the variation in range delay through the troposphere based on the elevation of the satellite (in reference to the user).

Similarly, ionospheric range errors may be modeled using a thin shell model which accounts for the elevation of the satellite along with geomagnetic latitude of the satellite's thin shell pierce point (ionospheric errors are largest near the equator and decrease as geomagnetic latitude increases).

Delta pseudo-range standard deviations can be calculated by determining the one standard deviation change of a pseudo-range error over a short time period (e.g., 1 second). For a 1st order Gauss-Markov model x(t), the one standard deviation change over time $\Delta t$ is:

$$\sigma_{\Delta x} = \sigma_x\sqrt{2\left(1 - e^{-\Delta t/\tau}\right)} \quad (50)$$

Where

$\sigma_x$ = Standard deviation of Gauss-Markov Model

$\tau$ = Time Constant of Gauss-Markov Model

While a preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

## Claims

**1.** A navigation system (12) for a vehicle having a receiver (14) operable to receive a plurality of signals from a plurality of transmitters, the navigation system comprising:

a processor (16); and
a memory device (18) having stored thereon machine-readable instructions that, when executed by the processor (16), enable the processor (16) to:

determine a set of error estimates corresponding to delta pseudo-range measurements derived from the plurality of signals,
determine an error covariance matrix for a main navigation solution, and
using a solution separation technique, determine at least one protection level value based on the error covariance matrix.

**2.** The system (12) of claim 1 wherein the instructions further enable the processor (16) to determine a set of error estimates corresponding to pseudo-range measurements derived from the plurality of signals.

**3.** The system (12) of claim 1 wherein the instructions further enable the processor (16) to determine an error covariance matrix for at least one navigation sub-solution.

**4.** The system (12) of claim 3 wherein determining at least one protection level value comprises determining a plurality of solution separation parameters, each solution separation parameter being based on statistics of a separation between the main navigation solution and a respective navigation sub-solution.

**5.** The system (12) of claim 4 wherein determining at least one protection level value further comprises determining an error bound for the main navigation solution based on at least one of the solution separation parameters.

**6.** The system (12) of claim 4 wherein determining at least one protection level value further comprises determining each solution separation parameter from a respective covariance matrix describing the statistics of the separation between the main navigation solution and the respective navigation sub-solution.

**7.** The system (12) of claim 1 wherein the at least one protection level value comprises a vertical-velocity integrity value.

**8.** The system (12) of claim 1 wherein the at least one protection level value comprises a flight-path-angle integrity value.

**9.** The system (12) of claim 1 wherein the at least one protection level value comprises a track-angle integrity value.

**10.** A navigation system (12) for a vehicle having a receiver (14) operable to receive a plurality of signals from a plurality of transmitters, the navigation system comprising:

a processor (16); and
a memory device (18) having stored thereon machine-readable instructions that, when executed by the processor (16), enable the processor (16) to:

determine from the plurality of signals a set of values corresponding to horizontal and vertical velocity states of the vehicle, and
based on said set of values, determine at least one protection level value associated with said velocity states.

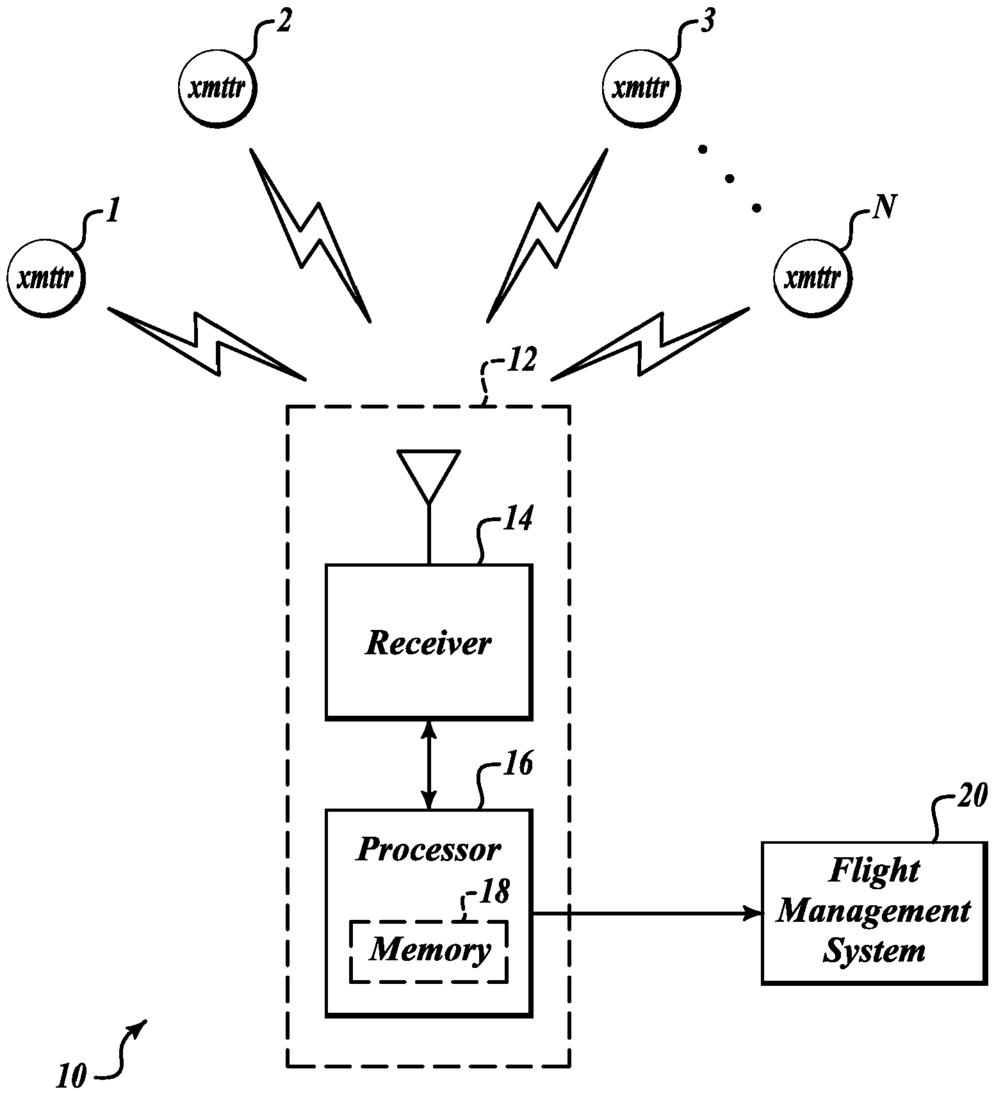
2
xmttr
3
xmttr
1
xmttr
N
xmttr
12
14
Receiver
16
Processor
18
Memory
20
Flight
Management
System
10

FIG.1

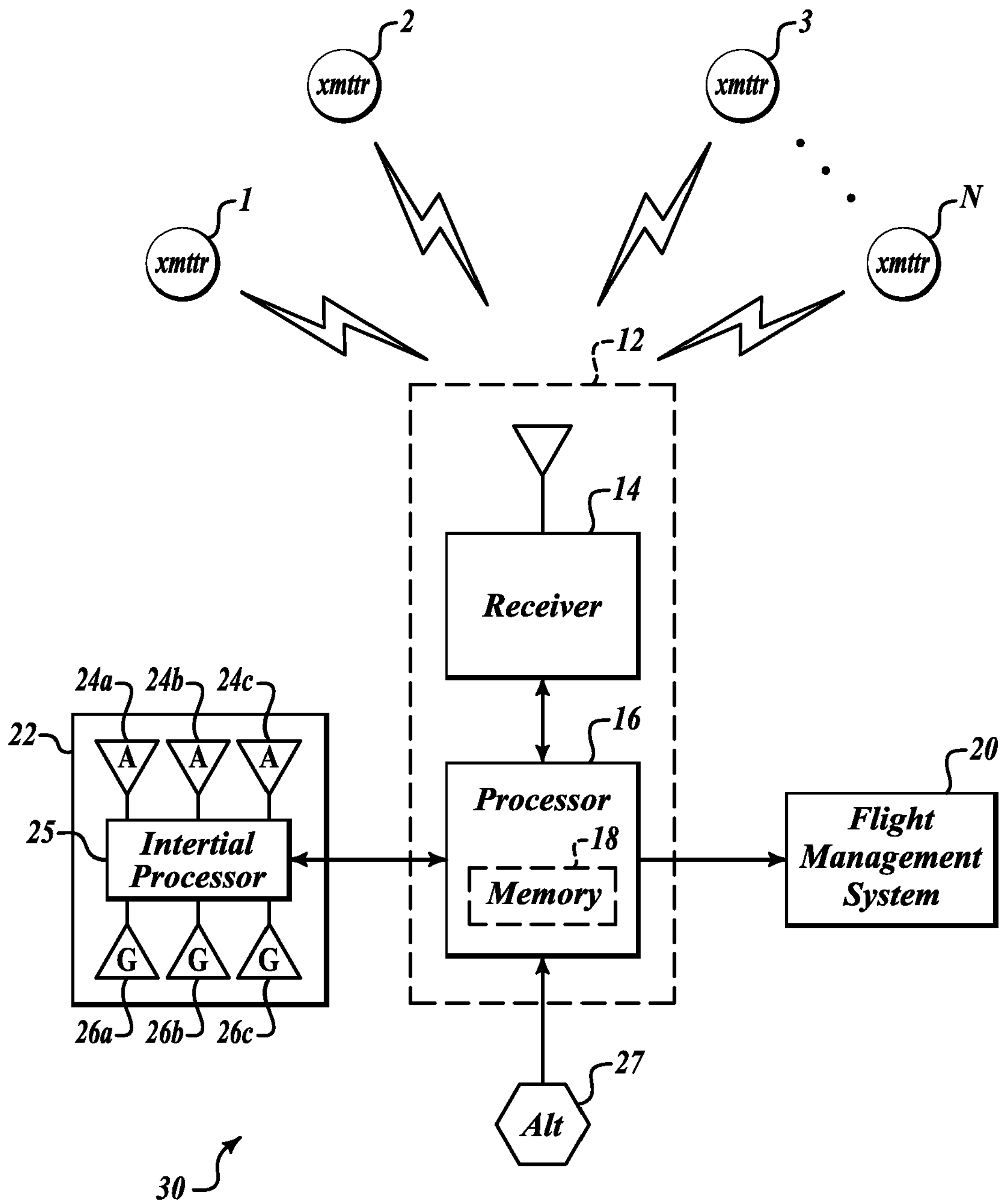
xmttr
1
xmttr
2
xmttr
3
xmttr
N
12
14
Receiver
16
Processor
18
Memory
20
Flight Management System
22
24a
24b
24c
A
A
A
25
Intertial Processor
G
G
G
26a
26b
26c
27
Alt
30

FIG.2

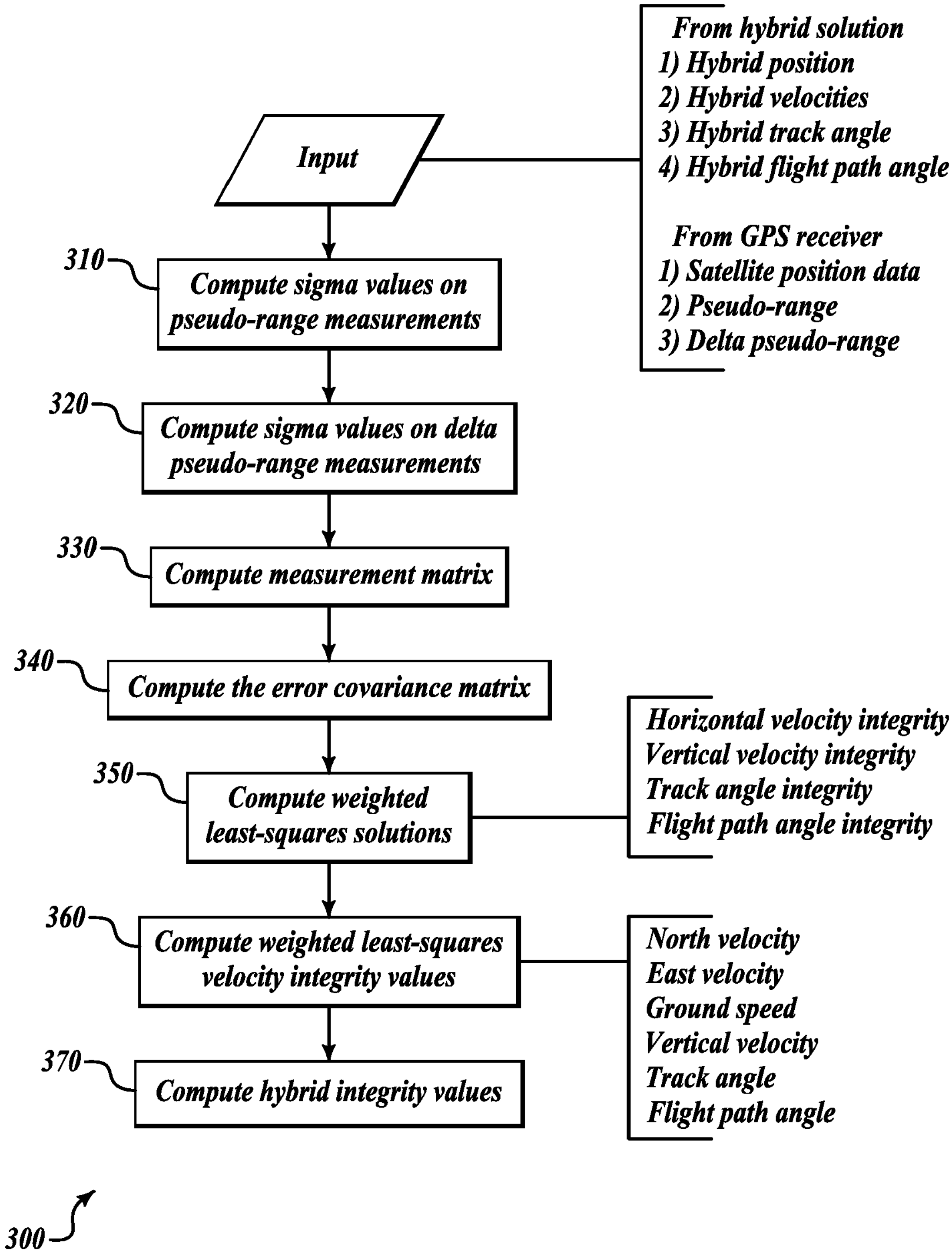
From hybrid solution
1) Hybrid position
2) Hybrid velocities
3) Hybrid track angle
4) Hybrid flight path angle
Input
From GPS receiver
1) Satellite position data
2) Pseudo-range
3) Delta pseudo-range
310
Compute sigma values on pseudo-range measurements
320
Compute sigma values on delta pseudo-range measurements
330
Compute measurement matrix
340
Compute the error covariance matrix
350
Compute weighted least-squares solutions
Horizontal velocity integrity
Vertical velocity integrity
Track angle integrity
Flight path angle integrity
360
Compute weighted least-squares velocity integrity values
North velocity
East velocity
Ground speed
Vertical velocity
Track angle
Flight path angle
370
Compute hybrid integrity values
300

FIG.3